# EUROPEAN PATENT APPLICATION

(11) **EP 1 580 675 A1**
(43) Date of publication of application: **28.09.2005**
(21) Application number: 03811069.8
(22) Date of filing: 05.11.2003
(51) Int. Cl.: G06F 17/60

(54) **RENTAL ESTIMATION METHOD**

(30) Priority: 12.11.2002 JP 2002328142
(71) Applicant: HITACHI CONSTRUCTION MACHINERY CO., LTD., Tokyo 100-0004 (JP)
(72) Inventor: SHIBATA, Koichi, Chiyoda-machi, Niihari-gun, Ibaraki 315- (JP); WATANABE, Hiroshi, Ushiku-shi, Ibaraki 300-1236 (JP); ADACHI, Hiroyuki, Tsuchiura-shi, Ibaraki 300-0023 (JP); SUGIYAMA, Genroku, Ryugasaki-shi, Ibaraki 301-0043 (JP); MIURA, Shuichi, Koshigaya-shi, Saitama 343-0041 (JP); ONO, Kiyoshi, Adachi-ku, Tokyo 121-0801 (JP); KONDOU, Itsuo, Ushiku-shi, Ibaraki 300-1234 (JP); KIMURA, Toshinori, Ishioka-shi, Ibaraki 315-0001 (JP)
(74) Representative: Winckels, Johannes Hubertus F.
(86) International application number: PCT/JP2003/014099
(87) International publication number: WO 2004/044804

(57) **Abstract**

In a rental estimation method according to the present invention, rental information with regard to rental devices is provided to a customer through a data exchange between a terminal (9) of the customer and a management server (5) of a rental company. The rental estimation method includes a data input step for entering work content data indicating a work content through the customer terminal (9), and a necessary device reporting step for reading out a list of a plurality of necessary devices matching the work content and rental information corresponding to the necessary devices from a predefined database (2 to 4) and for providing them to the customer.

## Description

### TECHNICAL FIELD

The present invention relates to a rental estimation method through which rental information with regard to rental devices needed to perform work the rental fee and the like is provided, a rental estimation system, a rental information acquisition terminal, a rental information acquisition program product and a rental information acquisition server.

### BACKGROUND ART

There are rental estimation systems known in the related art in which the rental fee is determined in correspondence to, for instance, the sales to be achieved by the customer (see, for instance, Japanese Laid Open Patent Publication No. 2002-1092921). In such a system, a specific device model best suited for the work content and the work schedule is selected from a database having stored therein maintenance management information, the sales figures to be achieved by using the particular device model and the expenses to be accrued are calculated and the rental fee is estimated based upon the calculated sales figures and expenses.

The system disclosed in the publication mentioned above simply selects a single device model and thus provides the estimate for the rental of the single work machine model. However, different types of devices must be utilized depending upon the specific nature of the work to be performed at the work site, and comprehensive rental information that the customer needs cannot be provided simply by providing the estimate for the rental of a single type of work machine. In particular, if the customer is unfamiliar with the type of work he is to undertake, it may not be clear to him exactly what types of equipment will be needed and it may be a daunting task for the customer himself to select the work machine models he will use by checking a catalog or the like.

### SUMMARY OF THE INVENTION

A rental estimation method through which rental information with regard to rental devices is provided to a customer through a data exchange between a terminal of the customer and a management server of a rental company according to the present invention, includes a data input step in which work content data indicating a work content are entered from the customer terminal, and a necessary device reporting step in which a list of a plurality of necessary devices matching the work content and rental information corresponding to the necessary devices are read out from a predefined database and are provided to the customer.

In this manner, it is possible to provide comprehensive rental information for a customer so that the customer can confirm the rental devices necessary for a given work with ease.

It is possible that a device to be rented is selected from the list of the necessary devices provided through the necessary device reporting step and that a device other than the necessary devices is added for rental. Moreover, a rental reservation for renting the selected device and the added device may be made, and then the reservation thus made may be accepted.

A rental estimation system according to the present invention includes a data input means through which data are entered by a rental customer, a work content management database in which a list of necessary devices each corresponding to a work content is stored, a stock management database in which rental information with regard to the necessary devices is stored, a rental management server that reads out a plurality of necessary devices matching a work content and rental information with regard to the necessary devices from the work content management database and the stock management database in response to input of data of a work content through the data input means, and a reporting means for providing the information read out by the rental management server to a customer.

A rental period entered and set through the data input means can be individually adjusted in correspondence to each of the necessary devices.

A device management database in which specification information relating to specifications of the necessary devices is stored may be provided and it is preferable, as a predefined detailed information display command is entered through the data input means, to read out specification information corresponding to the necessary device from the device management database and provide the specification information to a customer.

Necessary devices used in a given application can be grouped together and groups of necessary devices can be stored in the device management database, and the necessary device may be selectively switched to a device in a matching group when a predefined input is made through the data input means. An additional necessary device may be selected from the device management database in response to input of a predefined device add command.

A rental information acquisition terminal according to the present invention includes an input means for entering a work content as prompted in a screen brought up on display, a recognition means for recognizing the work content entered via the screen brought up on display, a transmission means for transmitting the recognized work content to a server, a reception means for receiving information indicating a plurality of types of devices matching the work content and rental information related to the devices, which are searched at the server based upon the work content, and a display means for displaying a screen in which the work content are entered and for bringing up a display of the information indicating the plurality of types of devices and their rental information having been received.

A rental information acquisition program product according to the presentinvention,for exchanging information related to a rental product between a customer terminal and a server connected through a communication circuit, the program product carries out computer-executable steps of generating and displaying a screen in which a work content is entered, recognizing the work content entered in the screen brought up on display, transmitting the recognized work content to the server, receiving information indicating a plurality of types of devices matching the work content and rental information related to the devices, which are searched based upon the transmitted work content, and generating and displaying a screen displaying the information indicating the devices and the rental information having been received.

A rental information acquisition server according to the present invention includes a database in which information indicating at least a plurality of types of devices and rental information corresponding to the devices are stored in memory in correspondence to a work content, a recognition means for recognizing a work content transmitted from a terminal, a search means for searching the database based upon the recognized work content to obtain information indicating a plurality of types of devices and rental information related to the devices in correspondence to the recognized work content, and a transmission means for transmitting the information indicating the devices and the rental information thus obtained to the terminal.

### BRIEF DESCRIPTION OF THE DRAWINGS

FIG. 1 is a schematic block diagram of a rental estimation system achieved in an embodiment of the present invention;
FIG. 2 shows the contents in a work content management database constituting the rental estimation system in the embodiment;
FIG. 3 shows the contents of a device management database constituting the rental estimation system in the embodiment;
FIG. 4 shows the contents of a stock management database constituting the rental estimation system in the embodiment;
FIG. 5 shows a work content input screen representing an example of display screens brought up at a monitor constituting the rental estimation system in the embodiment;
FIG. 6 shows a rental device selection screen representing an example of display screens brought up at the monitor constituting the rental estimation system in the embodiment;
FIG. 7 shows a detailed information display screen representing an example of display screens brought up at the monitor constituting the rental estimation system in the embodiment;
FIG. 8 shows an additional device selection screen representing an example of display screens brought up at the monitor constituting the rental estimation system in the embodiment;
FIG. 9 shows a rental confirmation screen representing an example of display screens brought up at the monitor constituting the rental estimation system in the embodiment; and
FIG. 10 presents a flowchart of an example of the procedure of processing executed at a customer terminal and a rental management server constituting the rental estimation system in the embodiment.

### BEST MODE FOR CARRYING OUT THE INVENTION

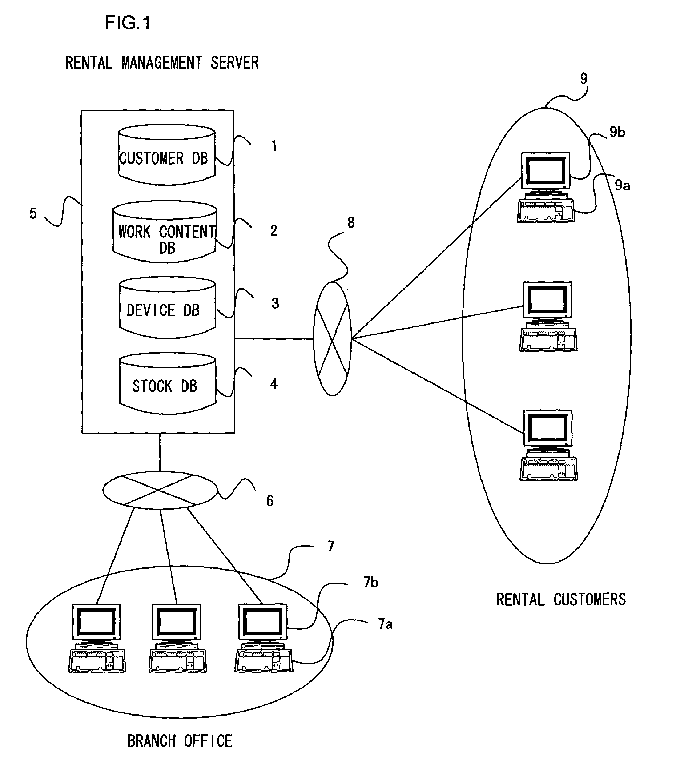

The following is an explanation of an embodiment in which a rental estimation system according to the present invention is adopted in the area of construction work, given in reference to FIGS. 1 through 10.

FIG. 1 is a schematic block diagram of the rental estimation system achieved in the embodiment. A rental management server 5 includes a customer management database 1 used to verify and register rental customers, a work content management database 2 holding data used to manage devices (necessary devices) in correspondence to specific contents of work for which they are needed, a device management database 3 used to manage detailed device information and a stock management database 4 used for stock management of rental devices. Computer terminals (hereafter referred to as branch terminals) 7 at a plurality of rental branch offices are connected to the rental management server 5 via a so-called in-house LAN (intranet) 6 and, in addition, computer terminals (hereafter referred to as customer terminals) 9 of a plurality of rental customers are connected to the rental management server 5 via the Internet 8. The branch terminals 7 and the customer terminals 8 each include a computer main unit 7a or 9a to which various types of data are input through a mouse or a keyboard and a monitor 7b or 9b.

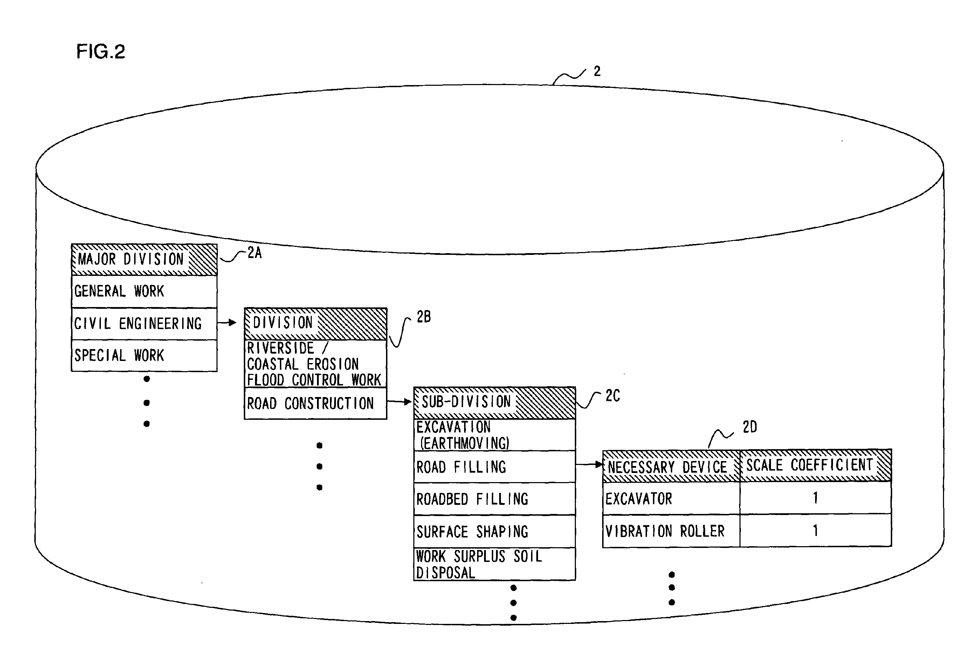

The contents of the data stored in the work content management database 2 are shown in FIG. 2. The work contents are sorted in three hierarchical layers, a major division, a division and a sub-division, and the specific type of work is selected from the data in the sub-division. The work content data sorted in these hierarchical layers are respectively stored in storage units 2A, 2B and 2C. Lists, each listing standard devices needed to perform one of the tasks stored in the storage unit 2C are stored in a storage unit 2D. It is to be noted that scale coefficient data in the storage unit 2D indicate coefficients each corresponding to the size of the necessary device to perform work on a specific work scale, e.g., a specific work area. Namely, a larger scale coefficient is set as the work area increases so that a larger device is selected.

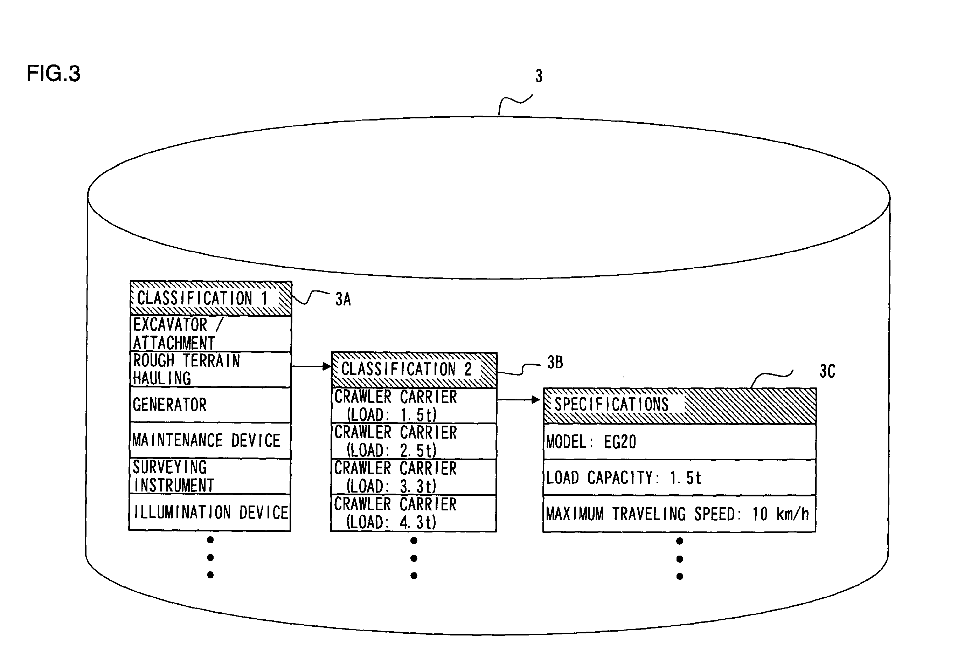

The contents of the data stored in the device management database 3 are shown in FIG. 3. In the device management database 3, various devices are grouped in correspondence to different applications. Namely, the different applications are listed under classification 1, and devices corresponding to each application are listed under classification 2. The data under classification 1 and classification 2 are respectively stored in storage units 3A and 3B. The specifications (model, load capacity, maximum traveling speed, etc.) of each device are stored in a storage unit 3C.

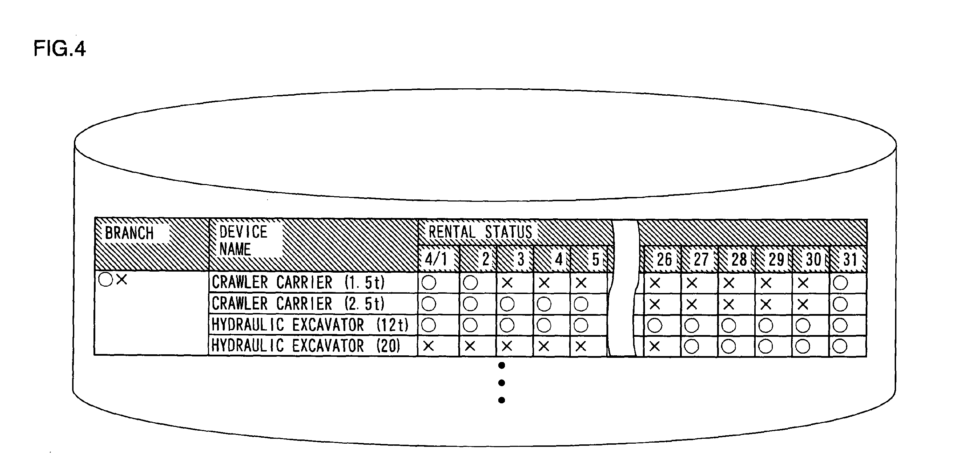

FIG. 4 shows the contents of the data stored in the stock management database 4. In the database 4, the names of devices managed by each rental branch office, and information indicating whether or not each device is reserved for rental (rental status data) on specific days are stored on a monthly basis. It is to be noted that the rental data are updated through processing executed at the rental management server 5 as a new rental reservation is entered or an existing rental reservation is canceled from a customer terminal 9. The rental data can also be updated by entering data from a branch terminal 7.

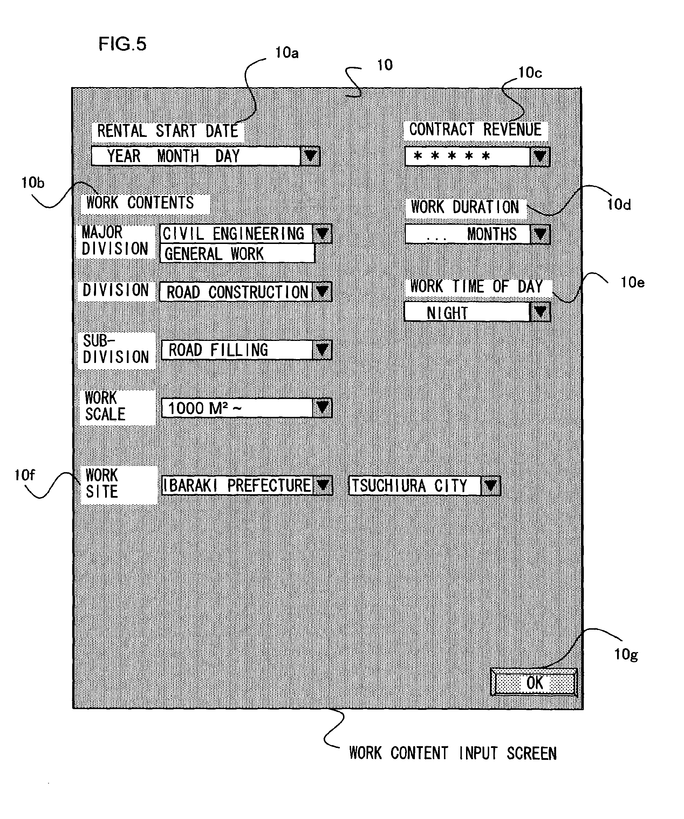

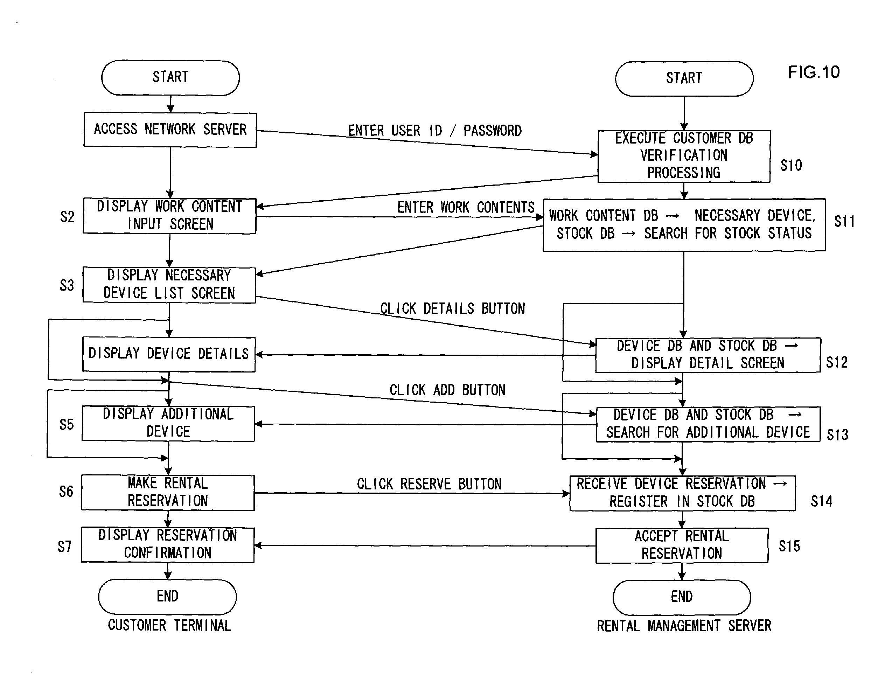

FIGS. 5 through 9 each show an example of a display screen brought up at a customer monitor 9b, and FIG. 10 presents a flowchart of an example of a rental reservation processing procedure that may be executed at the customer terminal 9 and the rental management server 5. The following is an explanation of the rental estimation method achieved in the embodiment, given in reference to the flowchart in FIG. 10.

### (Process 1) User ID / Password Entry

A rental information acquisition program is installed in advance at the customer terminal 9, and the program is executed in response to specific information input performed by the rental customer. First, the rental customer performs a specific input operation to access the rental management server 5 from the customer terminal 9 and then enters the user ID and the user password (step S1). The rental management server 5 reads out data from the customer database 1, executes verification processing to verify the entered user ID and password and enables access from the customer terminal 9 once the customer is verified to be an authorized user (step S10). In response, an input screen 10, in which the customer enters specific work content (work content input screen) such as that shown in FIG. 5 is brought up on display at the monitor at the customer terminal 9 (step S2).

### (Process 2) Data Entry

In the work content input screen 10 on display, the customer reviews the information in this screen and enters the work content and other information needed to make a rental reservation by using a mouse or a keyboard. More specifically, he enters the rental start date in a display field 10a in FIG. 5, enters the work content in a display field 10b, enters the contract revenue for undertaking the work in a display field 10c, enters the work duration in a display field 10d, enters the specific time of day during which the work is to be performed in a display field 10e and enters the location of the work site in a display field 10f. The display field 10b includes sub fields for entry items, i.e., the major division, the division, the sub-division and the work scale, in correspondence to the hierarchically layered structure of the data in the work content management database 2, and the rental customer clicks each entry item to pull down a menu of a plurality of sets of data and selects the correct data. As the data input performed in the work content input screen 10 on display is completed, the customer clicks an OK button 10g. It is to be noted that the data entered through the mouse or keyboard are recognized by a CPU in the computer main unit 9a.

### (Process 3) Necessary Device Display

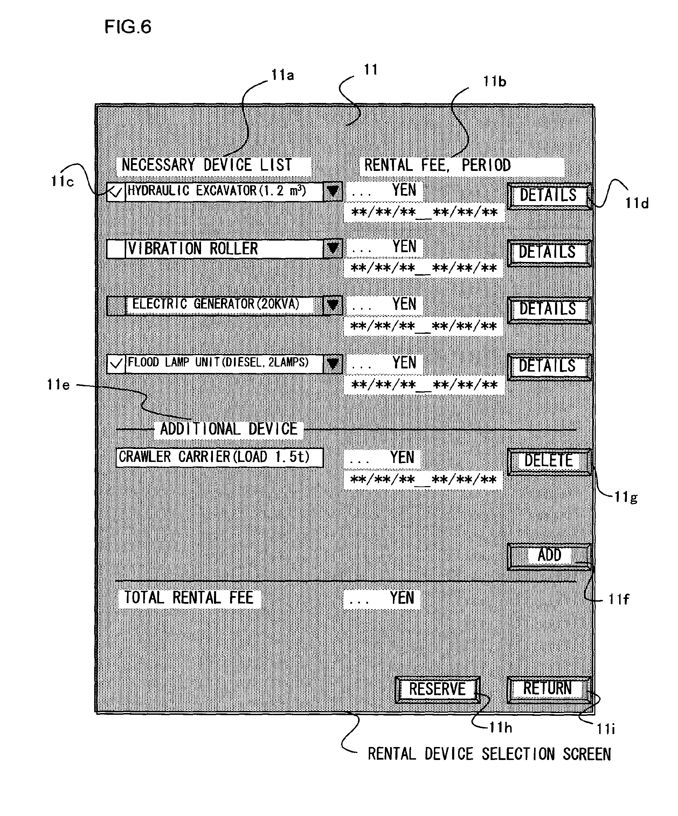

As the customer clicks the OK button 10g, the rental management server 5 reads out the data from the work content management database 2, selects the necessary devices corresponding to the entered data indicating the work content and executes a search to ascertain the rental statuses of the necessary devices by reading out data from the stock management database 4 (step S11). Consequently, a selection screen 11, in which the customer selects the rental devices (rental device selection screen) such as that shown in FIG. 6 is brought up on display at the customer monitor 9b (step S3).

As shown in FIG. 6, a list of the necessary devices read out from the work content management database 2 is displayed in a display field 11a, the rental fee and the rental period are indicated in correspondence to each device in a display field 11b, and the customer checks a display field 11c to indicate whether or not the customer wishes to rent each necessary device. The list of the necessary devices in the display field 11a corresponds to the work content entered as shown in FIG. 5. Namely, if the customer enters data indicating road filling, a work scale of 1000 m² or more and the like as the work contents, a hydraulic excavator, a vibration roller, an electric generator and a flood lamp unit are read out as the necessary devices from the work content management database 2 and are displayed as shown in FIG. 6.

The rental management server 5 compares the rental period entered by the customer with the device rental statuses read out from the stock management database 4, makes a decision as to whether or not the individual devices are available for rental and indicates the results of the decision by highlighting available devices. In the example presented in the figure, the available devices (the hydraulic excavator, the vibration roller and the flood lamp unit) are highlighted, whereas the unavailable device (the electric generator) is not highlighted.

It is to be noted that the rental management server 5 reads out devices belonging in the same groups as the individual necessary devices from the device management database 3 and enables a pull-down display of the devices thus read out in addition to displaying the necessary devices read out from the work content management database 2. Namely, as the customer clicks the display field 11a, a pull-down display of the devices read out from the device management database 3 is brought up at the display field 11a so as to allow the customer to select the desired device from the list. Since devices other than the devices read out from the work content management database 2 can also be called up on display in this manner, a given necessary device can be easily switched to another device in the same group.

### (Process 4) Device Details Display

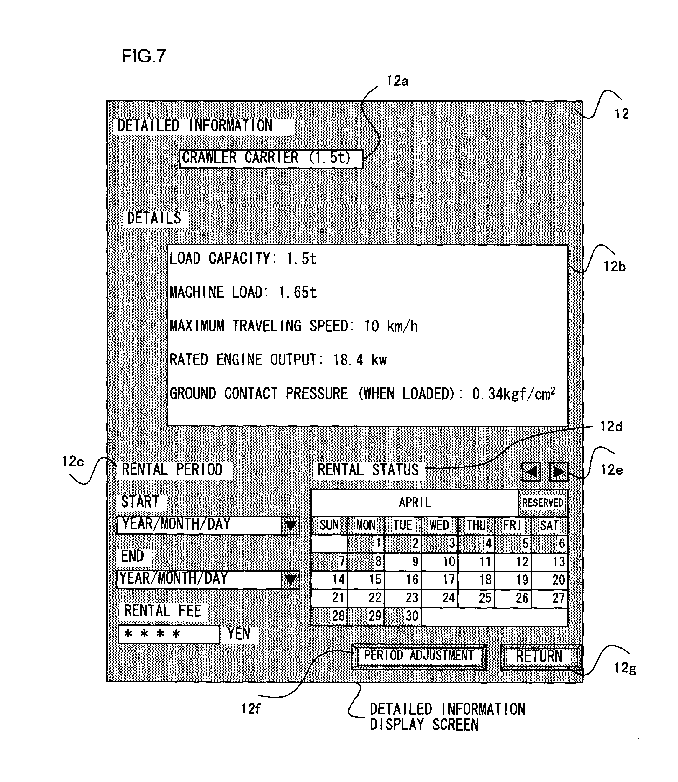

A details button 11d is displayed in correspondence to each necessary device in the rental device selection screen 11. As a details button 11d is clicked, a detailed information display command is output, and in response, the rental management server 5 reads out data corresponding to the necessary device from the device management database 3 and the stock management database 4 (step S12). Consequently, detailed information (detailed information display screen 12) such as that shown in FIG. 7 is displayed at the customer monitor 9b (step S4).

As shown in FIG. 7, the name of the device, the detailed information of which is displayed, is indicated in a display field 12a, information related to the specifications stored in the device management database 3 is displayed in a display field 12b, the rental period corresponding to the rental start date and the work duration entered in the work content input screen 10 in FIG. 5 and the rental fee are indicated in a display field 12c and the rental status of the device stored in the stock management database 4 is indicated in a display field 12d. It is to be noted that a monthly calendar is displayed in the display field 12d and the rental status is indicated by highlighting specific days in the calendar. Namely, the days on which the device is available for rental are highlighted and the days on which the device is not available are not highlighted in the figure. The customer clicks a shift button 12e to switch the calendar display in the display field 12d to another month.

### (Process 5) Rental Period Change

In the detailed information display screen 12, the customer is also allowed to change the rental period by clicking a period adjustment button 12f. Namely, after the customer clicks the period adjustment button 12f, he is allowed to enter a new rental period in the display field 12c. As a result, the customer is able to set different rental periods for the individual devices. It is to be noted that if the customer clicks a return button 12g, the rental device selection screen 11 is brought back on display at the monitor 9b. If the rental period has been changed in the detailed information display screen 12, the display in the display field 11b, too, is modified accordingly.

### (Process 6) Device Selection

Next, the customer selects each device that he wishes to rent in the rental device selection screen 11 by checking the corresponding display field 11c. Thus, the customer is allowed to decide for himself whether or not to rent the individual devices and choose not to rent any device that he already has. In this screen, the display field 11c for the unavailable device (electric generator) cannot be checked.

### (Process 7) Device Addition

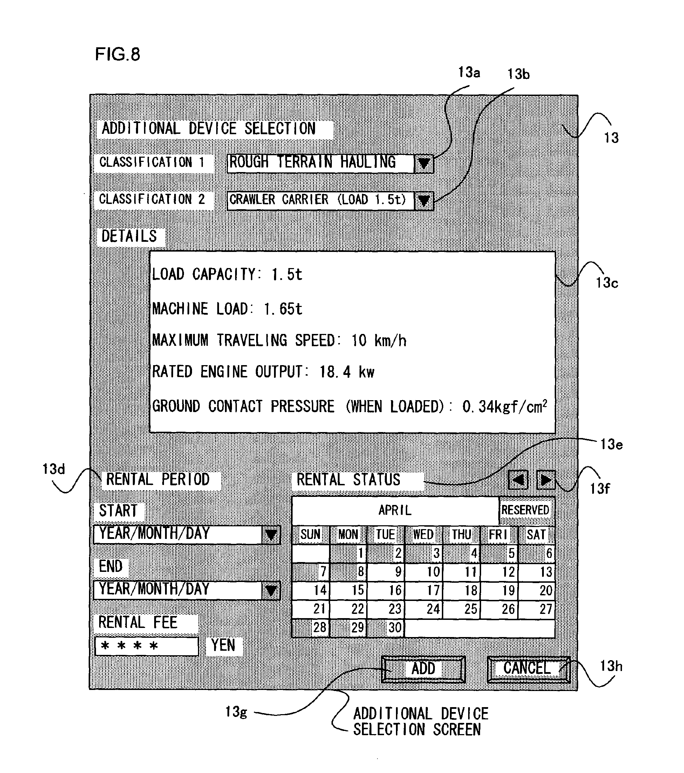

If the customer wishes to rent a device (additional device) other than the necessary devices displayed in the rental device selection screen 11, he clicks an add button 11f. As the add button 11f is clicked, a device add command is output, and in response, the rental management server 5 reads data from the device management database 3 and the stock management database 4 (step S13). Consequently, a selection screen 13, in which the customer can select an additional device (additional device selection screen) such as that shown in FIG. 8, is brought up at the monitor 9b (step S5).

As shown in FIG. 8, the additional device selection screen 13 includes display fields 13a, 13b and 13c in correspondence to the storage units 3A, 3B and 3C at the device management database 3. A specific application and a device corresponding to the application are indicated in the display fields 13a and 13b and the customer selects the additional device through the display fields 13a and 13b. Once the customer makes the selection, the specifications of the additional device are displayed in the display field 13c. In addition, the rental period and the rental fee are indicated in a display field 13d, whereas the rental status of the device read out from the stock management database 4 is displayed on a monthly basis in a display field 13e. It is to be noted that the rental period can be changed by entering an alternative date in the display field 13d. The display in the display field 13e can be switched to show the calendar of another month by clicking a shift button 13f.

As the customer clicks an add button 13g in the additional device selection screen 13, the display is switched back to the rental device selection screen 11 in which the additional device is indicated in the display field 11e, as shown in FIG. 6. In addition, any entry made in the additional device selection screen 13 can be canceled by clicking a cancel button 13h. The customer may also cancel the rental order for the additional device in the rental device selection screen 11 by clicking a delete button 11g. The customer clicks a return button 11i if he wishes to redo the entire procedure from scratch starting with the work content data entry. As the return button 11i is clicked, the work content input screen 10 is brought up on display at the monitor 9b to allow the customer to reenter the work contents.

### (Process 8) Rental Reservation

As the selection of the rental devices (the necessary devices and the additional device) is completed in the rental device selection screen 11, the customer clicks a reserve button 11h. In response, the reservation data are transmitted from the customer terminal 9 to the rental management server 5 where the rental reservation is received (step S6). The rental management server 5 registers the reservation data at the stock management database 4, thereby accepting the rental reservation (steps S14, S15).

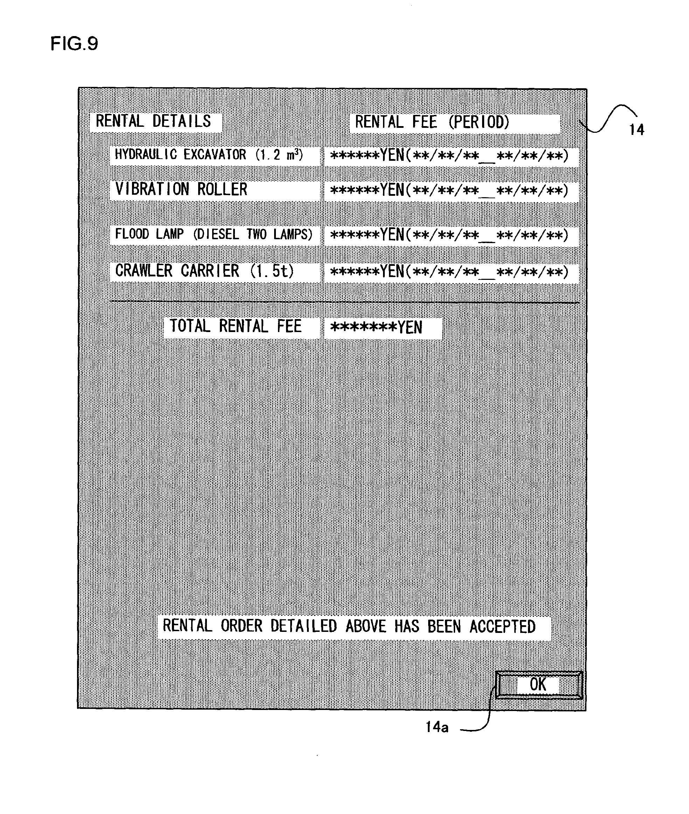

Once the rental reservation is accepted, a reservation confirmation screen 14 such as that shown in FIG. 9 is brought up on display at the monitor at the customer terminal 9 in (step S7). In the reservation confirmation screen 14, the reserved rental devices, the rental fees and the rental periods corresponding to the individual devices and the total rental fee are displayed. The customer verifies the rental details in the reservation confirmation screen 14 and then clicks an OK button 14a. With this, the rental reservation operation ends.

The rental estimation system in the embodiment achieves the following advantages.
(1) The work content and the desired rental period are entered from the customer terminal 9, and the rental management server 5 reads out a list of the necessary devices matching the entered data and the rental statuses of the necessary devices from the work content management database 2 and the stock management database 4. The data thus read out are then displayed at the monitor 9b at the customer terminal 9. Through these processes, comprehensive rental information is provided to the customer. Since such comprehensive rental information eliminates the need for the customer himself to select necessary devices in a catalog or the like even when the customer is to undertake work in a new field, the onus placed on the customer is reduced.
(2) Since the customer is allowed to select each device to rent by entering a check in the corresponding display field 11c in the rental device selection screen 11, the customer is able to select with ease only the devices he needs even when a plurality of necessary devices are displayed in the display field 11a.
(3) Since the work content are indicated in the hierarchically layered presentation with three different classification levels, the major division, the division and the sub-division, the customer is able to enter the work content with ease.
(4) A details button 11d is provided in correspondence to each device displayed in the rental device selection screen 11, and as the details button 11d is clicked, the display is switched to the detailed information display screen 12 with detailed information on a specific device to help the customer make a decision as to whether or not to rent the device.
(5) Since the rental status of the device is indicated in the monthly calendar in the detailed information display screen 12, the customer is able to ascertain the rental status and thus organize an appropriate rental schedule with ease.
(6) Since the rental period for each device can be changed by clicking the period adjustment button 12f, the absolute minimum rental period can be set for a specific device in correspondence to the work schedule to save on rental fees.
(7) Since an alternative device of the same type can be selected in place of a necessary device by clicking the display field 11a in the rental device selection screen 11, the customer can select with ease an alternative device even when, for instance, the necessary device is being rented out and is not available.
(8) Since the customer is able to rent an additional device as he wishes by clicking the add button 11f, even a special device that the customer needs in addition to the standard devices matching the work content can be ordered through a single rental reservation.
(9) As devices are stored in memory at the device management database 3 in groups, each corresponding to various applications, the customer is able to order an additional device with ease in correspondence to a specific application.
(10) The customer first verifies the rental information at the monitor 9b and then makes a rental reservation by clicking the reserve button 11h. Thus, the rental reservation operation can be performed with ease.
(11) The rental status data in the stock management database 4 are automatically updated as each new rental reservation is made, and thus, the reservation management by the rental company is facilitated.

The rental management system according to the present invention is not limited to the example presented in the embodiment described above, and allows for various alterations. While the rental information is displayed at the monitor 9b constituting a reporting means, the rental information may instead be directly printed out on a printer or the like, or it may be provided as an audio output. While the mouse or keyboard is used as a data input means, the data may instead be entered through voice entry or the like. While the period adjustment button 12f is clicked to individually adjust the rental period for the devices, a rental period adjustment means adopting another structure may be used. While a necessary device can be switched to an alternative device by clicking the display field 11e, a device switching means adopting another structure may be used. While data are exchanged via the Internet 8, another communication means may be utilized. If a necessary device is not in stock and is not available, data may be exchanged with an affiliated partner to find out if the device is in stock at the partner and the device may then be rented out to the customer if available. The rental company may transmit an electronic mail confirming the rental reservation several days before the start of the rental contract.

### INDUSTRIAL APPLICABILITY

The present invention may also be adopted in rental devices that are used in work other than construction work. Namely, the work content entered in the work content input screen 10 may be the contents of event preparation work or the like instead of construction work.

The disclosure of the following priority application is herein incorporated by reference:
Japanese Patent Application No. 2002-328142

## Claims

1. A rental estimation method through which rental information with regard to rental devices is provided to a customer through a data exchange between a terminal of the customer and a management server of a rental company, comprising:
a data input step for entering work content data indicating a work content through the customer terminal; and
a necessary device reporting step for reading out a list of a plurality of necessary devices matching the work content and rental information corresponding to the necessary devices from a predefined database and for providing them to the customer.

2. A rental estimation method according to claim 1, further comprising:
a device selection step for selecting a device to be rented from the list of the necessary devices provided through the necessary device reporting step.

3. A rental estimation method according to claim 1 or claim 2, further comprising:
a device adding step for adding a device other than the necessary devices for rental.

4. A rental estimation method according to claim 2, further comprising:
a device adding step for adding a device other than the necessary devices for rental;
a reservation step for making a rental reservation for renting the device selected in the device selection step and the device added in the device adding step; and
an accepting step for accepting the reservation made in the reservation step.

5. A rental estimation system comprising:
a data input means through which data are entered by a rental customer;
a work content management database in which a list of necessary devices each corresponding to a work content is stored;
a stock management database in which rental information with regard to the necessary devices is stored;
a rental management server that reads out a plurality of necessary devices matching a work content and rental information with regard to the necessary devices from the work content management database and the stock management database in response to input of data of a work content through the data input means; and
a reporting means for providing the information read out by the rental management server to a customer.

6. A rental estimation system according to claim 5, wherein:
the data input means further allows an entry of data indicating a rental period; and
the rental estimation system further comprises a rental period adjustment means for adjusting a rental period entered and set through the data input means individually in correspondence to each of the necessary devices.

7. A rental estimation system according to claim 5 or claim 6, further comprising:
a device management database in which specification information relating to specifications of the necessary devices is stored, wherein:
as a predefined detailed information display command is entered through the data input means, the rental management server reads out specification information corresponding to the necessary device from the device management database and provides the specification information to a customer.

8. A rental estimation system according to claim 7, wherein:
necessary devices used in a given application are grouped together and groups of necessary devices are stored in the device management database; and
the rental estimation system further comprises a device switching means for selectively switching the necessary device to a device in a matching group when a predefined input is made through the data input means.

9. A rental estimation system according to claim 8, further comprising:
an adding means for setting an additional necessary device selected from the device management database in response to a predefined device add command inputted through the data input means.

10. A rental information acquisition terminal comprising:
an input means for entering a work content as prompted in a screen brought up on display;
a recognition means for recognizing the work content entered via the screen brought up on display;
a transmission means for transmitting the recognized work content to a server;
a reception means for receiving information indicating a plurality of types of devices matching the work content and rental information related to the devices, which are searched at the server based upon the work content; and
a display means for displaying a screen in which the work content are entered and for bringing up a display of the information indicating the plurality of types of devices and their rental information having been received.

11. A rental information acquisition program product for exchanging information related to a rental product between a customer terminal and a server connected through a communication circuit, the program product comprising computer-executable steps of:
generating and displaying a screen in which a work content is entered;
recognizing the work content entered in the screen brought up on display;
transmitting the recognized work content to the server;
receiving information indicating a plurality of types of devices matching the work content and rental information related to the devices, which are searched based upon the transmitted work content; and
generating and displaying a screen displaying the information indicating the devices and the rental information having been received.

12. A rental information acquisition server comprising:
a database in which information indicating at least a plurality of types of devices and rental information corresponding to the devices are stored in memory in correspondence to a work content;
a recognition means for recognizing a work content transmitted from a terminal;
a search means for searching the database based upon the recognized work content to obtain information indicating a plurality of types of devices and rental information related to the devices in correspondence to the recognized work content; and
a transmission means for transmitting the information indicating the devices and the rental information thus obtained to the terminal.
